# EUROPÄISCHE PATENTSCHRIFT

(11) **EP 0 737 299 B1**
(45) Veröffentlichungstag und Bekanntmachung des Hinweises auf die Patenterteilung: **12.06.2002**
(21) Anmeldenummer: 95903754.0
(22) Anmeldetag: 20.12.1994
(51) Int. Cl.: G01B 7/34, G01N 27/00

(54) **RASTERSONDENMIKROSKOP MIT DETEKTORSONDE**
SCANNING FORCE MICROSCOPE WITH DETECTOR PROBE
MICROSCOPE A FORCES ATOMIQUES POURVU D'UNE SONDE DETECTRICE

(30) Priorität: 24.12.1993 DE 4344499
(43) Veröffentlichungstag der Anmeldung: 16.10.1996
(73) Patentinhaber: FORSCHUNGSZENTRUM JÜLICH GMBH, 52425 Jülich (DE)
(72) Erfinder: SAURENBACH, Frank, D-52134 Herzogenrath (DE); FUSS, Hans-Achim, D-52428 Jülich (DE)
(86) Internationale Anmeldenummer: DE9401508
(87) Internationale Veröffentlichungsnummer: WO9518352

(56) Entgegenhaltungen:
- EP-A- 0 361 932
- IBM TECHNICAL DISCLOSURE BULLETIN, Bd. 35,Nr. 3, August 1992 NEW YORK US, Seiten 207-208, XP 000326239 'Surface profilometer with ultra-high resolution'
- PATENT ABSTRACTS OF JAPAN vol. 17 no. 412 (P-1583) ,30.Juli 1993 & JP,A,05 079834 (BROTHER IND LTD) 30.März 1993,
- APPLIED OPTICS, Bd. 31,Nr. 31, 1.November 1992 NEW YORK US, Seiten 6772-6782, XP 000310820 M.J.OFFSIDE ; M.G.SOMEKH 'Interferometric scanning optical microscope for surface characterisation'
- JOURNAL OF VACUUM SCIENCE AND TECHNOLOGY: PART A, Bd. 11,Nr. 4, Juli 1993 - August 1993 NEW YORK US, Seiten 758-762, XP 000403705 M.NONNENMACHER ET AL 'Force micrscopy with actively stabilized differential fiber detection mechanism'

## Beschreibung

Die Erfindung bezieht sich auf ein Rastersondenmikroskop mit einer die Oberflächenstruktur von Objekten bis zur atomaren Auflösung detektierenden Sonde. Die Sonde ist an einer Sondenhalterung befestigt und wird relativ zur zu detektierenden Oberfläche bewegt. Dabei wird ein die Oberflächenstruktur charakterisierendes Struktursignal erzeugt, das auf ein Registrier- und Anzeigegerät zur Signalwidergabe übertragen wird.

Rastersondenmikroskope, insbesondere Rastertunnel- oder Rasterkraftmikroskope sind bekannt. Bei der Rastertunnelmikroskopie wird zur Erkennung atomarer Oberflächenstrukturen der Tunneleffekt genutzt, bei der Rasterkraftmikroskopie werden zur Oberflächendetektion lokale Änderungen v.d. Waals'scher oder magnetischer oder elektrostatischer Kräfte ermittelt. In beiden Fällen werden zur Detektion Sondenspitzen (Rasternadeln) verwendet und deren Bewegungen beim Abtasten (Rastern) der zu analysierenden Objektoberfläche gemessen.

Beim Rastertunnelmikroskop wird die Sondenbewegung durch Konstanthalten des Tunnelstroms zwischen Sondenspitze und Objektoberfläche erzielt, beim Rasterkraftmikroskop ergibt sich die Bewegung der Sonde durch das Einwirken gegebener v.d.Waals'schen, magnetischen oder elektrostatischen Kräfte auf die Sondenspitze.

Zum Abtasten der Bewegung der Sondenspitze sind als sehr empfindliche Detektoren Glasfaserinterferometer (Fabry-Perot-Interferometer) bekannt, mit denen mittels interferierendem Laserlicht Abstandsänderungen von weniger als 0,01 nm gemessen werden können. Zur Lichtleitung der Laserstrahlen werden dabei Glasfasern benutzt, die mit bidirektionalen Monomodefaserkopplern in der Weise verschaltet sind, daß das Laserlicht über den Koppler zur die Objektoberfläche abtastenden Sondenspitze geleitet wird, wobei der Lichtstrahl am Ende der Glasfaser in einen am Übergang Glasfaserende/Luft reflektierten Lichtanteil und einen aus der Glasfaser austretenden, auf die Sondenoberfläche gerichteten und dort reflektierten Lichtanteil zerfällt. Das Glasfaserende und die Sonde sind derart zueinander ausgerichtet, daß der an der Sondenoberfläche reflektierte Lichtstrahlanteil wieder in die Glasfaser eintritt und in der Glasfaser mit dem am Glasfaserende reflektierten Lichtstrahlanteil interferiert. Das auf diese Weise erzeugte Interferenzsignal wird als Maß für den gegebenen Abstand zwischen Glasfaserende und reflektierender Sondenoberfläche genutzt.

Die interferometrische Messung der Abstandsänderung und Bewegung der Sondenspitze weist einen hohen Auflösungsgrad auf. Die Qualität der Auflösung kann jedoch schon infolge geringer Störschwingungen, die von mechanischen Schwingungen von Sondenhalterung und zu untersuchendem Objekt verursacht werden, oder infolge unterschiedlicher Temperaturdrift erheblich beeinträchtigt werden. Bisher wird solchen Störeinflüssen durch eine aufwendige Schwingungsisolierung und durch kompakten Aufbau der Rastersondenmikroskope entgegengewirkt. Jedoch lassen sich insbesondere durch schlagartig auftretende Luftschwingungen, z.B. Trittschall entstehende Störungen auf diese Weise noch nicht ausreichend unterbinden.

Bekannt sind zur Behebung solcher Störungen aus "IBM Technical Disclosure Bulletin", Vol. 35, No. 3, 1992, die Verwendung eines Zweistrahl-Interferometers und aus EP-A-0 361 932 der Einsatz von zwei Rasterelektroden mit der Möglichkeit, den Abstand zwischen Probe und Halterung zu kompensieren. Solche Ausführungen erfordern jedoch einen erheblichen Aufwand bei der Auswertung der an das Registriergerät weitergeleiteten Meßgrößen.

Aufgabe der Erfindung ist es, ein Rastersondenmikroskop zu schaffen, das unvermeidliche Störschwingungen und Temperaturdrift zwischen Sonde und zu untersuchender Objektoberfläche in einfacher Weise eliminiert.

Diese Aufgabe wird bei einem eingangs angegebenen Rastersondenmikroskop durch die in Patentanspruch 1 angegebenen Maßnahmen gelöst. Danach wird dem von der Sonde abgegebenen Meßsignal ein die Relativbewegung zwischen Sondenhalterung und zu untersuchendem Objekt registrierendes Störsignal aufgeschaltet, wobei zur Bestimmung des Störsignals ein Interferometer eingesetzt ist, dessen Meßgröße vom Struktursignal unabhängig ist. Zur Anzeige gelangt allein das die Oberflächenstruktur charakterisierende Struktursignal. Vorteilhaft ist diese Ausbildung insbesondere dort, wo die Sonde des Rastersondenmikroskops und das zu untersuchende Objekt unabhängig voneinander gelagert sind, wo sich Sonde und Objekt somit bei Störschwingungen oder Temperaturdrift stets relativ zueinander bewegen. Zweckmäßig ist es, als Störsignal ein Signal zu verwenden, das die zu bestimmende Oberflächenstruktur nicht auflöst. Ein Störsignal dieser Art läßt sich mit dem von der Sonde abgegebenen Struktursignal in einfacher Weise so überlagern, daß das Struktursignal als charakteristische Meßgröße für die Oberflächenbeschaffenheit des zu messenden Objekts herausgehoben ist.

Bevorzugt wird die Relativbewegung zwischen Sonde und zu untersuchendem Objekt durch interferometrische Intensitätsveränderung eines Laserstrahls gemessen. Wird die Oberflächenstruktur des Objekts bereits interferometrisch bestimmt, so ist die interferometrische Ermittlung der Relativbewegung zwischen Sonde und Objekt zweckmäßig getrennt davon durchzuführen. Bei einem Rasterkraftmikroskop mit einer die Detektorsonde tragenden Biegefeder zur Bestimmung des Struktursignals werden bevorzugt zwei Laserstrahl-Interferometer verwendet, von denen eines zur Messung der Auslenkung der Biegefeder, das andere zur Messung des Störsignals dient, Patentanspruch 2. Die beiden optischen Signale lassen sich in elektronische Signale transformieren und den Registriergeräten zuführen, die das Struktursignal erarbeiten und zur Anzeige bringen. Es ist aber für die optischen Signale auch eine interferometrische Aufschaltung möglich, so daß allein das Struktursignal elektronisch zu transformieren ist.

Nachfolgend werden die Erfindung und weitere Ausgestaltungen der Erfindung anhand eines Ausführungsbeispiels näher beschrieben. Die Zeichnung zeigt ein Rastersondenmikroskop in schematischer Darstellung. Wiedergegeben ist in
- Figur 1: interferometrisches Rastersondenmikroskop;
- Figur 2: Interferometer für ein Rastersondenmikroskop nach Figur 1;
- Figur 3: Lichtintensitätsverlauf in Abhängigkeit vom Abstand zwischen Lichtleiter (Glasfaser) und Oberfläche des zu untersuchenden Objekts.

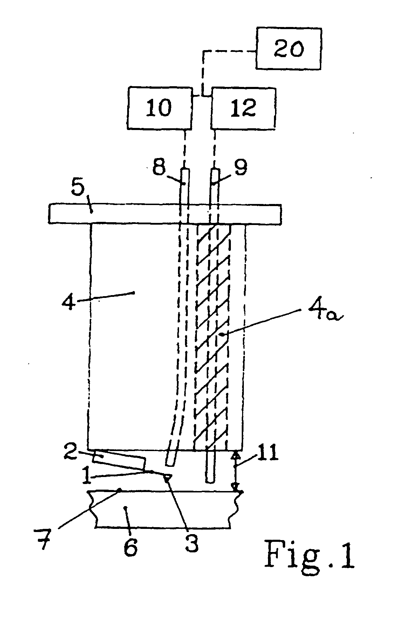

Figur 1 zeigt als Rastersondenmikroskop schematisch ein Rasterkraftmikroskop mit einer Biegefeder 1, die an einem ihrer Enden mit einer Sondenhalterung 2 fest verbunden und eingespannt ist und an ihrem anderen, nicht eingespannten Ende eine in der Zeichnung schematisch angedeutete Sondenspitze als Detektorsonde 3 trägt. Die Sondenhalterung 2 ist an einem Meßkopf 4 befestigt, der sich mittels einer Mikroskopbrücke 5 relativ zu einem zu detektierendem Objekt 6 bewegen läßt. Dabei wird die Detektorsonde 3 ohne Berührung des Objekts 6 über dessen Objektoberfläche 7 derart hinweggeführt, daß die Biegefeder 1 in Abhängigkeit von an der Objektoberfläche 7 auf die Detektorsonde 3 wirksamen Kräften (v.d. Waals'schen, magnetischen oder elektrostatischen Kräften) ausgelenkt wird.

Im Ausführungsbeispiel wird die Auslenkung der Biegefeder 1 sowie die Position der Mikroskopbrücke 5 im Verhältnis zum Objekt 6 interferometrisch ermittelt. Hierzu durchdringen den Meßkopf 4 eine Glasfaser 8 und einen Meßkopf 4a, der in gleicher Weise wie der Meßkopf 4 ortsfest an der Mikroskopbrücke 5 befestigt ist, eine Glasfaser 9 als Lichtleiter für Laserlichtstrahlen.

Im Ausführungsbeispiel dient das die Glasfaser 8 durchdringende Laserlicht zur Feststellung der gegebenen Biegefederauslenkung während der Bewegung (Rasterung) der Detektorsonde 3 über der Objektoberfläche 7. Die Glasfaser 8 endet deshalb derart in vorbestimmtem Abstand von der Biegefeder 1 entfernt, daß ein aus der Glasfaser 8 austretender Laserlichtstrahlanteil auf einem verspiegelten Oberflächenbereich auf der Rückseite der Biegefeder fällt, reflektiert wird und in die Glasfaser 8 wieder eintreten kann. Der eintretende Lichtstrahlanteil interferiert in der Glasfaser 8 mit einem Laserlichtstrahlanteil, der am Glasfaserende der Glasfaser 8 an der Grenzschicht Glasfaserende/Luft reflektiert wird. Der sich bei dieser Interferenz der beiden Lichtstrahlanteile einstellende Interferenzwert ist ein Maß für den Abstand zwischen Glasfaserende und Biegefederoberfläche, eine Änderung der Interferenz entspricht einer Änderung der Auslenkung der Biegefeder 1. Im Ausführungsbeispiel ist die Glasfaser 8 mit einem Interferometer 10 verbunden, das den Interferenzwert mißt.

Über die zweite im Ausführungsbeispiel den Meßkopf 4a durchdringende Glasfaser 9 wird Laserlicht zur Messung der Position zwischen Mikroskopbrücke 5 bzw. Meßkopf 4a und Objektoberfläche 7 geleitet. Die Glasfaser 9 endet hierzu derart in vorgegebenem Abstand über der Objektoberfläche 7, daß der am Glasfaserende austretende Laserlichtstrahlanteil an der Objektoberfläche 7 reflektiert werden kann und in die Glasfaser 9 zurückgeführt wird. Der in die Glasfaser 9 eintretende Lichtstrahlanteil interferiert hier mit dem am Übergang Glasfaserende/Luft in der Glasfaser 9 reflektierten Lichtstrahlanteil, wobei der sich einstellende Interferenzwert jetzt die Position des an der Mikroskopbrücke 5 befestigten Meßkopfes 4a und dessen Abstand 11 zur Objektoberfläche 7 wiedergibt. Die Glasfaser 9 ist im Ausführungsbeispiel mit einem zweiten Interferometer 12 verbunden, mit dem die sich ergebende Interferenz als Abstandswert gemessen wird.

Bleibt der Abstand 11 zwischen Meßkopf 4 und Objektoberfläche 7 bei der Rasterbewegung der Detektorsonde 3 konstant, ändert sich auch der vom Interferometer 12 gemessene Interferenzwert nicht. In diesem Falle entspricht der vom Interferometer 10 bestimmte Interferenzwert exakt der Auslenkung der Biegefeder 1 infolge der an der Objektoberfläche 7 auf die Detektorsonde 3 einwirkenden Kräfte. Jede Änderung der Interferenz gibt die topographischen Veränderungen an der Objektoberfläche bzw. die Veränderungen magnetischer oder elektrostatischer Domänen wieder.

Tritt bei der Rasterbewegung eine Störung durch eine Relativbewegung zwischen Mikroskopbrücke 5 mit Meßköpfen 4 und 4a und Objektoberfläche 7 auf, so wird vom Interferometer 12 eine Änderung der Interferenz festgestellt, die dem gleichzeitig vom Interferometer 10 gemessenen Interferenzwert derart aufgeschaltet wird, daß erneut nur der Meßwert zur Anzeige gelangt, der der Biegefederbewegung und somit der Beschaffenheit der Probenoberfläche entspricht. Bei einer vom Interferometer 12 festgestellten Abstandsvergrößerung zwischen Meßkopf 4a und Objektoberfläche 7 ist der vom Interferometer 10 gemessene Wert für die Detektion der Objektoberfläche um den Wert der Abstandsvergrößerung zu verkleinern, bei einer vom Interferometer 12 festgestellten Abstandsverkleinerung zwischen Meßkopf 4a und Objektoberfläche 7 ist der vom Interferometer 10 gemessene Wert für die Detektion der Objektoberfläche zu vergrößern.

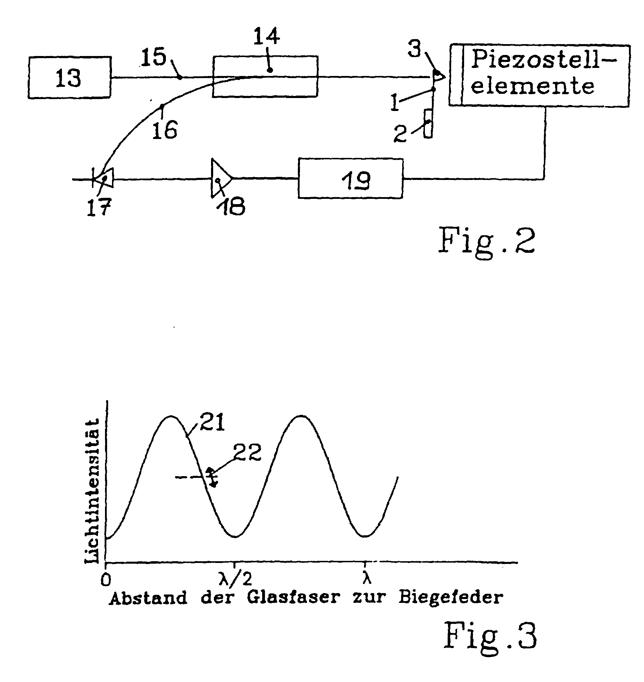

In Figur 2 ist schematisch eines der Interferometer 10, 12, im Ausführungsbeispiel das Interferometer 10 wiedergegeben. Der Aufbau des Interferometers entspricht einem Fabry-Perot-Interferometer, mit dem Abstandsänderungen von weniger als 0,01 nm gemessen werden können.

Zur Verzweigung eines in einer Laserdiode 13 erzeugten Laserlichtstrahles dient beim Interferometer 10 ein bidirektionaler 2 x 1 Monomodefaserkoppler 14, über den das in der Laserdiode 13 erzeugte Laserlicht über eine Glasfaser 15 zur verspiegelten Rückseite der Biegefeder 1 geführt wird. Das Laserlicht wird hier reflektiert und nach Wiedereintritt in die Glasfaser 8 zur Interferenz mit dem am Glasfaserende der Glasfaser am Übergang Glasfaserende/Luft reflektierten Laserlichtstrahlanteil gebracht. Der in der Glasfaser 8 zurücklaufende Interferenzstrahl wird vom Monomodefaserkoppler 14 ausgekoppelt und über eine Glasfaser 16 zu einer PIN-Diode 17 geführt.

In der PIN-Diode 17 wird das Laserlichtsignal in ein elektrisches Signal umgewandelt und in einem elektronischen Schaltelement 18 (mit Dividierer und Operationsverstärker) normiert und verstärkt. Das so vom Interferometer 10 erhaltene elektrische Signal ist ein Maß für den Abstand zwischen dem Glasfaserende der Glasfaser 8 und der verspiegelten Rückseite der Biegefeder 1.

Da die Lichtintensität mit einer Periode λ/2 oszilliert, wenn sich die Biegefeder 1 relativ zum Glasfaserende der Glasfaser 8 bewegt, lassen sich Interferenzänderungen 21 am empfindlichsten im linearen Signalbereich 22 detektieren, siehe Figur 3. Ein zum Interferometer 10 gehörender Regler 19 (PID-Regler) steuert deshalb den mittleren Abstand zwischen Detektorsonde 3 der Biegefeder 1 und der zu detektierenden Objektoberfläche 7 derart, daß Interferenzänderungen innerhalb des linearen Signalbereiches 22 gemessen werden können.

Auch das für die Bestimmung des Abstandes zwischen Meßkopf 4a und Objektoberfläche 7 eingesetzte Interferometer 12 ist in gleicher Weise aufgebaut, wie das in Figur 2 dargestellte Interferometer 10. Statt der Glasfaser 8 ist jetzt die Glasfaser 9 mit dem Interferometer verbunden.

Das vom Interferometer 12 abgegebene Interferenzsignal wird dem Interferenzsignal des Interferometers 10 in der Weise aufgeschaltet (addiert oder subtrahiert), daß lediglich das der Objektoberfläche 7 äquivalente Signal im schematisch in Figur 1 wiedergegebenen Anzeigegerät 20 zur Anzeige gelangt.

Somit ist es möglich, auf eine besondere Schwingungsisolation des Rastersondenmikroskopes oder auf eine Temperaturkompensation zu verzichten. Es lassen sich aufgrund des erfindungsgemäßen Mikroskopierverfahrens auch Mikroskope größerer Bauform zur Untersuchung großflächiger Proben einsetzen.

## Patentansprüche

1. Rastersondenmikroskop mit einer beweglichen Sondenhalterung (2) und einer daran befestigten Detektorsonde (3) zur Erzeugung eines, die Oberfläche (7) eines zu vermessenden Objekts (6) charakterisierenden Struktursignals, wobei die Detektorsonde (3) eine atomare Auflösung aufweist,
**gekennzeichnet durch**
- ein Interferometer (12) zur Messung eines Störsignals, welches sich aus der Abstandsänderung zwischen Sondenhalterung (2) und Oberfläche (7) ergibt,
- Mittel, die eine Aufschaltung von Stör- und Struktursignal derart ermöglichen, daß ein vom . Störsignal bereinigtes Struktursignal ermittelt wird sowie
- ein Registrier- und Anzeigegerät (20), welches das bereinigte Struktursignal anzuzeigen vermag.

2. Rastersondenmikroskop nach Anspruch 1,
**dadurch gekennzeichnet,**
**daß** es als Rasterkraftmikroskop mit einer die Detektorsonde (3) tragenden Biegefeder (1) gestaltet ist, wobei zur Bestimmung des Struktursignals zwei LaserstrahlInterferometer (10, 12) vorhanden sind, die so gestaltet sind, daß eines zur Messung der Auslenkung der Biegefeder (1), das andere zur Messung des Störsignals dient.

## Claims

1. Scanning probe microscope with a movable probe support (2) and a thereto attached detector probe (3) for generating a structural signal which characterises the surface (7) of an object to be measured (6), and the detector probe (3) has an atomic resolution,
**characterised by**
• an interferometer (12) for measuring an interference signal which results from a change in distance between the probe support (2) and the surface (7);
• means which facilitate inclusion of interference and structural signal in such a manner that a structural signal cleared of the interference signal can be determined; and
• a registration and display device (20) which is capable of displaying the cleared structural signal.

2. Scanning probe microscope according to Claim 1, **characterised in that** it is designed as a scanning force microscope with a flexural spring (1) which supports the detector probe (3), and for the purpose of determining the structural signal two laserbeam interferometers (10, 12) are provided which are designed so that one serves to measure the deflection of the flexural spring (1) and the other serves to measure the interference signal.

## Revendications

1. Microscope à forces atomiques doté d'un support de sonde mobile (2) et d'une sonde détectrice auquel elle est fixée (3), destiné à produire un signal de structure de caractérisation de la surface (7) d'un objet à mesurer (6), dans lequel la sonde détectrice (3) présente une résolution atomique, **caractérisé par**
- un interféromètre (12) servant à mesurer un signal parasite qui se produit du fait de la modification de la distance entre le support de la sonde (2) et la surface (7),
- un dispositif qui permet une intrusion du signal parasite et du signal de structure de façon qu'un signal de structure corrigé du signal parasite soit déterminé, et
- un dispositif d'enregistrement et d'affichage (20) qui permet d'afficher le signal de structure corrigé.

2. Microscope à forces atomiques selon la revendication 1, **caractérisé en ce qu'**il est configuré comme un microscope à forces atomiques muni d'un ressort spiral (1) portant la sonde détectrice (3), deux interféromètres à rayon laser (10, 12) étant utilisés pour déterminer le signal de structure, lesdits interféromètres étant configurés de telle façon que l'un serve à mesurer la déformation du ressort spiral (1), et l'autre, à mesurer le signal parasite.
